# EUROPÄISCHE PATENTSCHRIFT

(11) **EP 3 801 948 B1**
(45) Veröffentlichungstag und Bekanntmachung des Hinweises auf die Patenterteilung: **29.04.2026**
(21) Anmeldenummer: 19728664.4
(22) Anmeldetag: 04.06.2019
(51) Int. Cl.: B21F 27/12

(54) **VORRICHTUNG ZUR HERSTELLUNG EINER BEWEHRUNG**
DEVICE FOR PRODUCING A REINFORCEMENT
DISPOSITIF DE FABRICATION D'UNE ARMATURE

(30) Priorität: 05.06.2018 DE 102018113294
(43) Veröffentlichungstag der Anmeldung: 14.04.2021
(73) Patentinhaber: MBK MASCHINENBAU GmbH, D-88353 Kisslegg (DE)
(72) Erfinder: LEHMANN, Jens, 88326 Aulendorf (DE)
(74) Vertreter: RavensPAT Patentanwälte Partnerschaft mbB
(86) Internationale Anmeldenummer: PCT/EP2019/064418
(87) Internationale Veröffentlichungsnummer: WO 2019/233981

(56) Entgegenhaltungen:
- EP-A1- 3 209 836
- EP-A2- 2 196 271
- WO-A1-99/15286
- DE-A1- 2 100 742
- FR-A1- 2 076 006
- GB-A- 2 022 478

## Beschreibung

Die Erfindung betrifft eine Vorrichtung zur Herstellung einer Bewehrung.

### Stand der Technik

Vorrichtungen zur Herstellung einer Bewehrung der einleitend bezeichneten Art sind bereits bekannt. Eine bekannte Vorrichtung ist zum Beispiel als eine Korbschweißmaschine zum Erstellen eines Bewehrungskörpers ausgebildet, **z.B.** bekannt aus der EP 2 196 271 A2 oder der FR 2 076 006 A1.

Die Korbschweißmaschine ist beispielsweise zur Herstellung eines Bewehrungskörpers für **z.B.** ein Betonrohr oder einer Stütze ausgebildet, wobei die Korbschweißmaschine einen Wickeldraht, welcher sich schraubenförmig um Längsdrähte des Bewehrungskörpers erstreckt, an einer Kreuzungsstelle des Wickeldrahts und eines Längsdrahts mittels eines Schweißverfahrens miteinander verschweißt. Die bekannte Korbschweißmaschine umfasst zum Verschweißen des Wickeldrahts mit dem Längsdraht eine Widerstandsschweißanlage, wodurch vergleichsweise geringe Zykluszeiten realisiert sind.

Nachteilig daran ist, dass durch das Widerstandsschweißen des Wickeldrahts mit dem Längsdraht Material des Wickeldrahts an der Fügestelle bzw. Schweißstelle verschwindet, wodurch eine Stabilität des Bewehrungskörpers an dieser Stelle geschwächt ist. Auch sind für bestimmte Anwendungen, z.B. in Erdbebengebieten oder im Hochseeeinsatz, Bewehrungen oder insbesondere Bewehrungskörper, welche insbesondere ausschließlich verschweißte Längs- und Wickeldrähte aufweisen, nicht geeignet.

Ebenfalls ist eine Vorrichtung zum Binden von Bewehrungen aus der WO 2016/063221 A4 bekannt.

### Aufgabe und Vorteile der Erfindung

Aufgabe der vorliegenden Erfindung ist es, eine verbesserte Vorrichtung zur Herstellung einer Bewehrung bereitzustellen, insbesondere das Anwendungsgebiet der Vorrichtung zur Herstellung einer Bewehrung zu erweitern.

Diese Aufgabe wird durch die Merkmale des Anspruchs 1 gelöst.

In den abhängigen Ansprüchen sind vorteilhafte und zweckmäßige Ausführungsformen der Erfindung angegeben.

Die Erfindung geht von einer Vorrichtung zur Herstellung einer Bewehrung aus, wobei die Vorrichtung Positioniermittel zur automatisierten Positionierung eines Längs- und eines Querdrahts der herzustellenden Bewehrung aufweist. Die Positioniermittel sind beispielsweise derart ausgebildet, dass eine Längs- und eine Querdraht teilautomatisiert oder vollautomatisiert zueinander positionierbar sind. Vorteilhafterweise sind ein Längsdraht und ein Querdraht mittels der Positioniermittel zeitlich gesehen nacheinander oder auch gleichzeitig, insbesondere relativ zueinander, positionierbar.

Vorteilhafterweise ist die Vorrichtung zur Herstellung eines Bewehrungskörpers der Bewehrung ausgebildet, wobei der Bewehrungskörper eine Mehrzahl von Längsdrähten, insbesondere von Längsstäben, und einen Querdraht, insbesondere einen beispielsweise einzigen Wickeldraht aufweist, wobei die Längsstäbe durch die Vorrichtung mit dem Wickeldraht verbindbar sind. Denkbar ist auch, dass zwei, drei oder mehr Wickeldrähte am Bewehrungskörper vorgesehen sind.

Erfindungsgemäß ist die Vorrichtung ausgebildet, eine zentrale Längsachse vorzugeben, entlang derer die Längsstäbe bei der Herstellung des Bewehrungskörpers in eine Förderrichtung und zeitgleich um die zentrale Längsachse bewegt werden, insbesondere gedreht. Die Längsstäbe geben vorteilhafterweise eine Länge des Bewehrungskörpers vor. Vorteilhafterweise ist die Vorrichtung derart ausgebildet, dass die Vorrichtung die Längsstäbe, insbesondere alle Längsstäbe vorteilhafterweise mit einer gleichen Beschleunigung und/oder einer gleichen Geschwindigkeit bewegt und/oder dreht.

Beispielsweise umfasst die Vorrichtung ein Gestell, welches dazu ausgebildet ist, einen insbesondere radialen Abstand eines Längsdrahts relativ zur Längsachse vorzugeben. Denkbar ist weiterhin, dass das Gestell dazu ausgebildet ist, dass ein insbesondere radialer Abstand eines Längsdrahts zur Längsachse insbesondere während eines Herstellungsvorgangs des Bewehrungskörpers veränderlich ist. Beispielswiese ist das Gestell dazu ausgebildet, dass ein Bewehrungskörper herstellbar ist, welcher Längsstäbe aufweist, welche verschiedene insbesondere radiale Abstände zur Längsachse des Bewehrungskörpers aufweisen. Hierdurch ist beispielsweise ein Bewehrungskörper mit einem ovalen Querschnitt herstellbar. Denkbar ist auch, dass die Vorrichtung, insbesondere das Gestell, dazu ausgebildet ist, dass ein Bewehrungskörper herstellbar ist, welcher entlang seiner Längsachse verschiedene Querschnitte aufweist. Beispielsweise ist ein radialer Abstand eines Längsdrahts zur Längsachse zu einem weiteren radialen Abstand des gleichen Längsdrahts zur Längsachse entlang der Längsachse des Bewehrungskörpers verschieden.

Der Wickeldraht des Bewehrungskörpers ist beispielsweise um die Längsstäbe insbesondere spiralförmig gewickelt. Zum Beispiel ist die Vorrichtung dazu ausgebildet, den Wickeldraht um die Stäbe zu wickeln. Vorstellbar ist auch, dass die Vorrichtung dazu ausgebildet ist, den Wickeldraht in einer Ebene quer, insbesondere senkrecht, zur Längserstreckung des Bewehrungskörpers am Bewehrungskörper anzuordnen. Beispielsweise ist die Vorrichtung dazu ausgebildet, den Wickeldraht kreisförmig am Bewehrungskörper anzuordnen.

Der Bewehrungskörper ist z.B. als eine Bewehrung eines Rohrs, eines Pfahls, einer Stütze und/oder eines Pfeilers ausgebildet. Der Bewehrungskörper ist beispielsweise in einem Querschnitt, insbesondere quer zu einer Längserstreckung eines Stabs gesehen, rechteckig, quadratisch, mehr- oder vieleckig, rund und/oder oval ausgebildet. Durch die Vorrichtung sind vorteilhafterweise Bewehrungskörper in Form eines Bewehrungskorbs oder einer Bewehrungsmatte herstellbar.

Vorteilhafterweise umfasst ein Längsstab bzw. Stab, insbesondere jeder Längsstab, einen größeren Durchmesser als der Draht, z.B. der Querdraht oder der Wickeldraht. Denkbar ist auch, dass der Durchmesser eines Drahts und der Durchmesser des Stabs gleich oder zumindest ähnlich ausgebildet sind. Der Stabdurchmesser liegt beispielsweise in einem Bereich zwischen 5mm und 60mm. Z.B. ist der Stabdurchmesser 20mm, 25mm, 30mm, 35mm, 40mm, 45mm, 50mm, 55mm oder 60mm. Denkbar ist auch, dass die Durchmesser von zwei oder mehr Stäben des Bewehrungskörpers verschieden sind.

Der Wickeldrahtdurchmesser ist beispielsweise zwischen 1mm und 20mm, insbesondere zwischen 2mm und 15mm. Beispielsweise ist der Wickeldrahtdurchmesser 4mm, 5mm, 6mm, 7mm, 8mm, 9 mm, 10mm, 11mm, 12mm, 13mm, 14mm oder 15mm. Umfasst der Bewehrungskörper mehrere Wickeldrähte, so ist es denkbar, dass die Wickeldrähte einen gleichen Durchmesser aufweisen oder verschiedene Durchmesser umfassen.

Der Kern der Erfindung ist darin zu sehen, dass die Vorrichtung eine Bindeeinheit aufweist, wobei die Vorrichtung dazu ausgebildet ist, mittels der Bindeeinheit die positionierten Drähte durch ein Bindeelement an einer Bindestelle automatisch miteinander zu verbinden.

Die Vorrichtung ist beispielsweise als eine Bewehrungsherstellmaschine ausgebildet. Beispielsweise ist die Bewehrungsherstellmaschine als eine Bewehrungskörperherstellmaschine, z.B. als eine Bewehrungskorbherstellmaschine und/oder als eine Bewehrungsmattenherstellmaschine ausgebildet. Die Vorrichtung ist beispielsweise als eine Korbbindemaschine, z.B. als eine Pfahl-Bewehrungskorb-Herstellmaschine oder eine Pfeiler-Bewehrungskorb-Herstellmaschine oder als eine Rohr-Bewehrungskorb-Herstellmaschine bzw. als eine Bewehrungsrohrbindemaschine ausgebildet. Denkbar ist auch, dass mit der vorgeschlagenen Korbbindemaschine ein Bewehrungsmattenkorb, z.B. eine 3-dimensionale Bewehrungsmatte, herstellbar ist.

Weiter wird vorgeschlagen, dass die Vorrichtung dazu ausgebildet ist, dass die Vorrichtung einen Querdraht und einen Längsdraht, insbesondere der herzustellenden Bewehrung, in einem Winkel zueinander ausrichtet.

Vorteilhafterweise kreuzen sich ein Querdraht und ein Längsdraht an der Bindestelle. Die Querdrähte und Längsdrähte sind an einer Bindestelle durch die Bindeeinheit miteinander verbindbar. Vorstellbar ist z.B., dass der Querdraht oder der Längsdraht an der Bindestelle parallel oder in einem Winkel, z.B. quer, zueinander verlaufend, insbesondere mittels der Vorrichtung ausgerichtet, sind. Bevorzugterweise ordnet die Vorrichtung einen Querdraht und einen Längsdraht, insbesondere der herzustellenden Bewehrung, in einem Winkel größer 0° zueinander an. Vorteilhafterweise besitzen eine Längsachse des Querdrahts und eine Längsachse des Längsdrahts einen Winkel zueinander.

Erfindungsgemäß ist das Bindeelement als ein Biegedraht und/oder eine Biegeschnur ausgebildet.

Das Bindeelement ist vorteilhafterweise als ein Draht, insbesondere als ein Bindedraht, z.B. als ein Rödeldraht ausgebildet. Der Bindedraht hat vorteilhafterweise einen Durchmesser zwischen 0,5mm und 1,5mm, z.B. zwischen 0,6mm und 1,4mm. Der Durchmesser des Bindedrahts ist etwa 0,6mm, 0,7mm, 0,8mm, 0,9mm, 1,0mm, 1,1mm oder 1,2mm. Beispielsweise ist der Bindedraht aus Metall ausgebildet. Insbesondere ist das Bindeelement, z.B. der Bindedraht, beschichtet oder ummantelt vorhanden. Der Bindedraht ist beispielweise verzinkt. Der Bindedraht ist beispielsweise aus Stahl, insbesondere in Form eines Stahldrahts, ausgebildet. Der Stahldraht ist beispielsweise beschichtet oder verzinkt. Beispielsweise ist das Bindeelement kunststoffbeschichtet ausgebildet, z.B. umfasst das Bindeelement einen Kunststoffmantel.

Das Bindeelement ist beispielsweise als ein einfacher Bindedraht vorhanden. Denkbar ist auch, dass das Bindeelement als ein zweifacher oder mehrfacher Bindedraht ausgebildet ist. Der zweifache oder mehrfache Bindedraht kann z.B. mehrere Drähte aufweisen, welche vorteilhafterweise parallel zueinander verlaufen. Beispielsweise umfasst der zweifache Bindedraht zwei insbesondere identische Bindedrähte, die entlang ihrer Längsachsen nebeneinander vorhanden sind. Beispielsweise sind die beiden Drähte des zweifachen Bindedrahts entlang ihrer Längsachsen miteinander verbunden. Beispielsweise sind die beiden Drähte des zweifachen Bindedrahts, insbesondere entlang ihrer Längsachsen, miteinander verklebt und/oder verschweißt. Das Bindeelement, z.B. der Bindedraht, ist beispielsweise als eine Litze vorhanden.

Das Bindeelement ist beispielsweise als ein sogenannter Doppeldraht ausgebildet und umfasst insbesondere genau zwei Drähte. Denkbar ist auch, dass das Bindeelement als ein Clip oder eine Klammer ausgebildet ist. Z.B. ist das Bindeelement clipartig oder klammerartig vorhanden.

Erfindungsgemäß weisen die Positioniermittel eine Positioniereinheit auf, um die Bindeeinheit insbesondere automatisch zu positionieren. Hierdurch ist ein Verbinden der Quer- und Längsdrähte in einem kontinuierlichen Herstellungsprozess des Bewehrungskörpers realisierbar, wodurch vorteilhafterweise eine Herstellungszeit der Bewehrung, z.B. eine Herstellungszeit des Bewehrungskörpers, verkürzt ist.

Ebenfalls erweist es sich von Vorteil, dass Teile der Bindeeinheit, z.B. ein Bindekopf in alle drei Raumrichtungen bewegbar an der Vorrichtung, insbesondere am Gestell, gelagert sind. Beispielweise ist der Bindekopf in alle drei Raumrichtungen bewegbar an der Vorrichtung gelagert, insbesondere durch die Positioniermittel bewegbar. Denkbar ist auch, dass der Bindekopf in genau zwei Raumrichtungen bewegbar gelagert ist. Beispielsweise ist der Bindekopf in genau zwei Raumrichtungen jeweils linearbeweglich an der Vorrichtung gelagert, beispielsweise mittels zweier Linearachsen.

Vorstellbar ist beispielsweise, dass der Bindekopf entlang zweier Linearachsen, welche quer, insbesondere senkrecht, zueinander vorhanden sind, beweglich, insbesondere linearbeweglich vorhanden ist. Vorteilhafterweise ist der Bindekopf in jede Raumrichtung einzeln, insbesondere separat, bewegbar gelagert, z.B. linearbeweglich. Beispielsweise ist der Bindekopf entlang einer Kreisbahn beweglich geführt an der Vorrichtung angeordnet, wobei die Kreisbahn einen Mittelpunkt aufweist, welcher beispielsweise mit der zentralen Längsachse der Vorrichtung zusammenfällt. Von Vorteil erweist sich auch, dass der Bindekopf, derart beweglich, insbesondere derart positionierbar, vorhanden ist, dass der Bindekopf entlang einer Steigung eines Wickeldrahts des Bewehrungskörpers ausrichtbar, beispielsweise positionierbar ist. Beispielsweise ist der Bindekopf in einer Richtung quer, insbesondere senkrecht zu der zentralen Längsachse der Vorrichtung und/oder einer Längserstreckung eines Längsstabs des Bewehrungskörpers schwenkbar, z.B. drehbar gelagert.

Die Positioniereinheit ist beispielsweise in Form eines Roboterarms vorhanden. Der Roboterarm ist bevorzugterweise dazu ausgebildet, einen Bindekopf der Bindeeinheit einer Bewegung einer Bindestelle, insbesondere einer Bewegung des Wickeldrahts und/oder eine Bewegung eines Längsstabs des herzustellenden Bewehrungskörpers nachzuführen. Vorteilhafterweise ist an einem Ende des Roboterarms der Bindekopf der Bindeeinheit angeordnet. Hierdurch ist eine vergleichsweise größtmögliche Bewegungsfreiheit des Bindekopfs realisierbar.

Beispielsweise umfasst die Vorrichtung eine Steuerungseinheit, um Fügevorgänge, z.B. Bindevorgänge der Bindeeinheit und/oder eine Bewegungen der Bindeeinheit, z.B. des Bindekopfs zu Regeln bzw. zu Steuern. Vorteilhafterweise umfasst die Steuerungseinheit unter anderem eine Kontrolleinheit und ein Sensorelement, z.B. zur Detektion einer Bindestelle des Bewehrungskörpers.

Außerdem erweist es sich von Vorteil, dass die Vorrichtung eine Schweißanlage aufweist, mittels welcher der Längs- und der Querdraht insbesondere zusätzlich miteinander verbindbar sind. Hierdurch ist eine Herstellung von gebundenen Bewehrungen möglich, welche auch insbesondere gefahrlos transportierbar sind, ohne dass beispielsweise die Gefahr eines Auseinanderfallens der Bewehrung oder Lösen einzelner Drähte, z.B. beim Kranen, besteht.

Die Schweißanlage ist beispielsweise als eine Widerstandsschweißanlage und/oder eine Schutzgasschweißanlage ausgebildet. Die Schutzgasschweißanlage ist vorteilhafterweise als eine Metall-Inertgas-Schweißanlage (MIG-Schweißanlage) und/oder als eine Wolfram-Inertgas-Schweißanlage (WIG-Schweißanlage) ausgebildet. Denkbar ist auch, dass die Schutzgasschweißanlage als eine Plasmaschweißanlage vorhanden ist.

Vorteilhafterweise umfassen die Positioniermittel eine insbesondere weitere Positioniereinheit, um z.B. einen Schweißkopf der Schweißanlage zu bewegen, insbesondere zu positionieren.

In einer vorteilhaften Ausgestaltung der Erfindung ist die Bindeeinheit derart ausgebildet, dass ein Quer- und ein Längsdraht an der Bindestelle durch ein beispielsweise einziges Bindeelement insbesondere gemeinsam umwickelbar ist.

Die Bindeeinheit ist beispielsweise als ein insbesondere automatisches Bewehrungsbindegerät ausgebildet. Die Bindeeinheit ist vorteilhafterweise als eine Vorrichtung zum insbesondere automatischen, beispielsweise lösbaren Verbinden von Bewehrungsdrähten und/oder -stäben einer Bewehrung ausgebildet. Die Bindeeinheit stellt vorteilhafterweise das Bindeelement bereit und umwickelt den Quer- und Längsdraht an der Bindestelle beispielsweise mit dem Bindeelement. Das Bindeelement kann hierbei Bestandteil eines Endlosdrahts sein. Beispielsweise längt die Bindeeinheit das Bindeelement von einem Endlosdraht ab und führt das Bindeelement vorteilhafterweise an die Bindestelle heran.

Vorteilhafterweise ist die Bindeeinheit derart ausgebildet, dass der Quer- und der Längsdraht an der Bindestelle durch das Bindeelement insbesondere durch den Bindedraht einfach oder mehrfach umwickelbar ist. Beispielsweise wickelt die Bindeeinheit das Bindeelement einmal, zweimal, dreimal oder viermal um den Quer- und den Längsdraht an der Bindestelle. Denkbar ist auch, dass die Bindeeinheit derart ausgebildet ist, dass der Quer- und der Längsdraht an der Bindestelle mittels eines Doppeldrahts einmal oder zweimal umwickelbar ist.

Das Bindeelement umschlingt, umgreift und/oder umschließt z.B. den Quer- und Längsdraht an der Bindestelle, z.B. schlingen-, schlaufen- oder ringartig.

Ein insbesondere maximaler innere Durchmesser des Bindeelements im angeordneten Zustand an der Bindestelle, insbesondere ein beispielsweise maximaler innerer Schlaufen- oder Schlingendurchmesser des Bindeelements, entspricht vorteilhafterweise etwa der Summe der Durchmesser des Längsdrahts und des Querdrahts.

Im angeordneten Zustand des Bindeelements an der Bindestelle sind Enden des Bindeelements miteinander verdreht, verdrillt und/oder spiralförmig umeinander verlaufend vorhanden. Die Enden des Bindeelements sind vorteilhafterweise quer zu einer Längserstreckung des Längsdrahts und quer zu einer Längserstreckung des Querdrahts abstehend vorhanden. Eine abstehende Länge der Enden des Bindeelements, insbesondere eine abstehende Gesamtlänge jedes Endes des Bindeelements, vom Quer- und/oder Längsdraht im angeordneten Zustand an der Bindestelle ist vorteilhafterweise nicht länger als 14mm, insbesondere nicht länger als 12mm. Beispielsweise stehen die Enden in einer Länge zwischen 5mm und 14mm, zwischen 8mm und 14mm, zwischen 5mm und 12mm, beispielsweise zwischen 8mm und 12mm von einem der Drähte ab. Bevorzugterweise stehen die Enden des Bindeelements quer, insbesondere senkrecht zu einer Längserstreckung des Längsdrahts und/oder quer, insbesondere senkrecht zu einer Längserstreckung des Querdrahts nicht weiter als 14mm vom Längsdraht und/oder vom Querdraht ab.

Denkbar ist auch, dass eine Länge eines Endes des Bindeelements größer als 14mm ist. In diesem Fall ist es vorstellbar, dass die Enden nach einem Anbringen durch die Bindeeinheit, beispielsweise mittels der Bindeeinheit umgebogen sind, sodass ein am weitesten entfernter Punkt eines Endes des Bindeelements nicht weiter als 14mm quer zu einer Längserstreckung des Querdrahts und/oder quer zu einer Längserstreckung des Längsdrahts vom Querdraht und/oder vom Längsdraht abstehen.

Außerdem wird vorgeschlagen, dass die Bindeeinheit derart ausgebildet ist, dass ein Bindemoment des Bindeelements an der Bindestelle vorgebbar ist.

Das Bindeelement ist an der Bindestelle vorteilhafterweise derart anordenbar, dass im angeordneten Zustand des Bindeelements an der Bindestelle der Quer- und der Längsdraht, insbesondere quer zu ihren jeweiligen Längserstreckungen gesehen, aneinander anliegen, z.B. durch das Bindeelement aneinander angedrückt sind. Vorteilhafterweise ist ein Bindemoment bzw. ein Binde-Kraftmoment des Bindeelements auf den Quer- und/oder auf den Längsdraht an der Bindestelle vorgebbar.

Erfindungsgemäß ist die Vorrichtung derart ausgebildet, dass die Positioniereinheit eine Bewegung der Bindeeinheit derart an eine Bewegung eines Längs- und/oder eines Querdrahts anpasst, dass die Bindeeinheit relativ zu der Bindestelle während eines Bindevorgangs ortsfest verbleibt. Beispielsweise führt die Positioniereinheit die Bindeeinheit einer Bewegung des Quer- und/oder des Längsdrahts nach. Hierdurch ist eine Zykluszeit zur Herstellung einer Bewehrung beispielsweise verkürzt.

Vorteilhafterweise sind an der Vorrichtung Bewegungsmittel vorhanden. Beispielsweise umfasst die Positioniereinheit die Bewegungsmittel. Die Bewegungsmittel sind bevorzugterweise derart ausgebildet, die Bindeeinheit einer Bewegung einer Bindestelle einer herzustellenden Bewehrung, insbesondere einer Bewegung eines Längs- und/oder Querdrahts der herzustellenden Bewehrung, nachzuführen. Beispielsweise sind die Bewegungsmittel dazu ausgebildet, den Bindekopf der Bindeeinheit einer Bewegung einer zu bearbeitenden Position der Bewehrung, insbesondere der Bindestelle, nachzuführen. Die Bewegungsmittel umfassen z.B. einen Antrieb, z.B. in Form eines Elektromotors. Denkbar ist auch, dass die Bewegungsmittel einen pneumatischen und/oder einen hydraulischen Antrieb umfassen.

In einer vorteilhaften Ausbildung weist die Vorrichtung, insbesondere die Bindeeinheit, ein Mitnehmerorgan auf. Beispielsweise steht die Bindeeinheit mit dem Mitnehmerorgan an einem Längs- und/oder Querdraht an, sodass eine Bewegung des Längs- und/oder Querdrahts eine Bewegung des Mitnehmerorgans und damit beispielsweise eine Bewegung des Bindekopfs bewirkt. Hierdurch ist ein Nachführen der Bindeeinheit, insbesondere des Bindekopfs, an eine Position einer Bindestelle vergleichsweise einfach und zuverlässig realisiert.

Vorteilhafterweise bewegt der Längs- und/oder Querdraht das Mitnehmerorgan, beispielsweise zusammen mit dem Bindekopf, um die zentrale Längsachse der Vorrichtung. Beispielsweise bewegt der Längs- und/oder Querdraht das Mitnehmerorgan, beispielsweise zusammen mit dem Bindekopf, auf einer Kreisbahn um die zentrale Längsachse der Vorrichtung. Beispielsweise bildet die zentrale Längsachse einen Mittelpunkt der Kreisbahn des Mitnehmerorgans, während das Mitnehmerorgan durch den Längs- und/oder Querdraht um die zentrale Längsachse bewegt wird. Beispielsweise bewirkt eine Bewegung, insbesondere eine Drehbewegung des Längs- und/oder Querdrahts eine Bewegung des Mitnehmerorgans.

Beispielsweise bewegt der Längsdraht das Mitnehmerorgan, z.B. zusammen mit dem Bindekopf, in Richtung einer Vorschubrichtung des Längs- und/oder Querdrahts entlang der zentralen Längsachse der Vorrichtung. Hierdurch erfährt der Bindekopf vorteilhafterweise eine überlagerte Bewegung, welche beispielsweise spiralartig ausgestaltet ist. Beispielsweise bewegt sich der Bindekopf entlang einer Kreisbahn, entlang einer Spirale oder entlang einer Ellipse.

Das Mitnehmerorgan ist bevorzugterweise beweglich, insbesondere linearbeweglich, an der Vorrichtung, beispielsweise an der Bindeeinheit, insbesondere am Bindekopf vorhanden. Hierdurch ist ein Koppeln und/oder ein Entkoppeln des Mitnehmerorgans mit dem Längs- und/oder Querdraht realisierbar. Beispielsweise ist das Mitnehmerorgan mittels einer Antriebseinheit bewegbar vorhanden. Die Antriebseinheit ist beispielweise elektrisch, pneumatisch und/oder hydraulisch angetrieben.

Weiter wird vorgeschlagen, dass die Vorrichtung zwei oder mehr Bindeeinheiten aufweist. Hierdurch ist vorteilhafterweise die Zykluszeit zur Herstellung der Bewehrung reduziert, z.B. etwa halbiert. Vorteilhafterweise sind die zwei oder mehr Bindeeinheiten identisch ausgebildet. Beispielsweise sind die Bindeeinheiten, insbesondere die Bindeköpfe der Bindeeinheiten beabstandet zueinander an der Vorrichtung, insbesondere am Gestell der Vorrichtung angeordnet.

Von Vorteil erweist sich ebenfalls, dass die zwei oder mehr Bindeeinheiten durch die Positioniermittel unabhängig voneinander positionierbar vorhanden sind. Vorteilhafterweise umfassen die Positioniermittel mehrere Positioniereinheiten. Beispielsweise sind die Bindeeinheiten mittels der Positioniermittel getrennt oder zusammen bewegbar, z.B. synchron bewegbar an der Vorrichtung vorhanden. Beispielsweise bewegt und/oder positioniert jede Positioniereinheit eine insbesondere einzige Bindeeinheit.

In einer vorteilhaften Ausgestaltung ist die Vorrichtung derart ausgebildet, dass eine Bindungsrichtung des Bindeelements an der Bindestelle vorgebbar ist. Unter der Bindungsrichtung des Bindeelements ist eine Richtung verstanden, entlang welcher sich das Bindeelement relativ zu einer Längsachse und/oder einer Längserstreckung des Längs- und/oder Querdrahts und/oder relativ zur zentralen Längsachse der Vorrichtung erstreckt. Beispielsweise ist unter der Bindungsrichtung des Bindeelements eine Ausrichtung einer Symmetrieachse einer Schlinge oder Schlaufe des Bindeelements im angeordneten Zustand an der Bindestelle relativ zu einer Längsachse und/oder einer Längserstreckung des Längs- und/oder Querdrahts zu verstehen. Denkbar ist auch, dass das Bindeelement im angeordneten Zustand an der Bindestelle zwei oder mehr verschiedene Bindungsrichtungen aufweist. Vorteilhafterweise verlaufen die verschiedenen Bindungsrichtungen quer, insbesondere senkrecht zueinander. Beispielsweise umfasst das Bindeelement an der Bindestelle zwei oder mehr Schlingen oder Schlaufen. Beispielsweise überkreuzen sich zwei oder mehr Schlingen oder Schlaufen an der Bindestelle. Denkbar ist auch, dass zwei oder mehr Schlingen oder Schlaufen zumindest annähernd parallel zueinander vorhanden sind. Beispielsweise sind die Schlingen oder Schlaufen des einen Bindeelements oder mehrere, z.B. zweier Bindeelemente über eine Breitenerstreckung des Längs- und/oder Querdrahts voneinander beabstandet an der Bindestelle vorhanden.

Weiter erweist es sich als vorteilhaft, dass die Vorrichtung, insbesondere die Bindeeinheit derart ausgestaltet ist, dass verschiedene Bindeelemente verwendbar sind. Die verschiedenen Bindeelemente unterscheiden sich beispielsweise im Durchmesser und/oder in der Ausgestaltung. Z.B. ist ein Bindeelement in einer Ausgestaltung ummantelt und in einer anderen Ausgestaltung nicht-ummantelt vorhanden. Denkbar ist auch, dass ein Bindeelement in einer weiteren oder in einer gleichen Ausgestaltung einadrig, zweiadrig oder mehradrig vorhanden ist. Denkbar ist, dass die Bindeeinheit umrüstbar ausgebildet ist, sodass zwischen einer Herstellung einer ersten Bewehrung und einer Herstellung einer zweiten Bewehrung, die Bindeeinheit derart verändert werden kann, dass zur Herstellung der ersten Bewehrung mittels der Bindeeinheit ein erstes Bindeelement an einer Bindestelle der ersten Bewehrung anbringbar ist und zur Herstellung der zweiten Bewehrung mittels der gleichen Bindeeinheit ein zweites, vom ersten Bindeelement verschiedenes Bindeelement an einer Bindestelle der zweiten Bewehrung anbringbar ist.

Außerdem ist es von Vorteil, dass die Vorrichtung, insbesondere die Bindeeinheit derart ausgestaltet ist, dass mehrere insbesondere verschiedene Bindeelemente verwendbar sind. Denkbar ist beispielsweise, dass eine Bindeeinheit derart vorhanden ist, dass die Bindeeinheit gleichzeitig oder nacheinander zueinander verschiedene Bindeelemente an eine gleiche Bindestelle anbringen kann oder, dass die Bindeeinheit zueinander verschiedene Bindeelemente an aufeinander folgenden Bindestellen anbringen kann. Beispielsweise umfasst die Vorrichtung zwei oder mehr Bindeeinheiten und die zumindest zwei Bindeeinheiten sind derart vorhanden, dass die beiden Bindeeinheiten zueinander unterschiedliche Bindeelemente an eine gleiche oder an zueinander verschiedene Bindestellen anbringen können.

Auch wird vorgeschlagen, dass die Vorrichtung, insbesondere die Bindeeinheit derart ausgestaltet ist, dass verschiedene Längs- und/oder Querdrähte miteinander verbindbar sind. Die verschiedenen Längs- und/oder Querdrähte unterscheiden sich beispielsweise in ihren Durchmessern oder in ihren insbesondere äußeren Querschnitten. Beispielsweise umfasst eine herzustellende Bewehrung zumindest zwei oder mehr zueinander verschiedene Längsdrähte. Vorteilhafterweise ist die Vorrichtung und insbesondere die Bindeeinheit dazu ausgebildet, an einer Bindestelle die Dimensionen des Längs- und/oder Querdrahts zu erkennen, insbesondere zu detektieren und sich entsprechend einzustellen, beispielsweise einen Abstand des Bindekopfs der Bindeeinheit zur Bindestelle zu regeln und/oder einen Schlaufendurchmesser und/oder eine Bindeelementlänge entsprechend anzupassen.

In einer vorteilhaften Ausgestaltung der Erfindung ist die Vorrichtung zur Herstellung einer Bewehrung, als eine Korbbindemaschine, insbesondere als eine Bewehrungskorbbindemaschine und/oder als eine Mattenkorbbindemaschine ausgebildet.

### Beschreibung von Ausführungsbeispielen

Verschiedene Ausführungsbeispiele werden anhand der nachstehenden schematischen Zeichnungen unter Angabe weitere Einzelheiten und Vorteile näher erläutert.

Es zeigen:
- Figur 1: eine perspektivische Teilansicht von schräg vorne oben auf eine erfindungsgemäße Vorrichtung,
- Figur 2: eine perspektivische Teilansicht von schräg vorne oben auf eine weitere Variante der Vorrichtung,
- Figur 3: eine perspektivische Ansicht auf eine Rolle eines Bindeelements,
- Figur 4: verschiedene Bindeelemente in einer Teilansicht,
- Figur 5: eine perspektivische Ansicht auf eine Bewehrung mit Bindestellen, wobei an jeweils einer Bindestelle ein Bindeelement mit unterschiedlicher Wicklungszahl angeordnet ist,
- Figur 6: eine perspektivische Ansicht auf eine Bewehrung mit Bindestellen, an welche jeweils ein Bindeelement angeordnet ist, wobei eine Ausrichtung der Bindeelemente verschieden ist,
- Figur 7: eine perspektivische Ansicht auf eine Bewehrung mit Bindestellen, wobei Enden der Bindeelemente an den Bindestellen verschieden weit abstehend vorhanden sind und
- Figuren 8 bis 11: eine perspektivische Ansicht auf einen Bewegungsablauf eines Bindekopfs zum Binden einer Bindestelle einer Bewehrung mit einem Bindeelement.

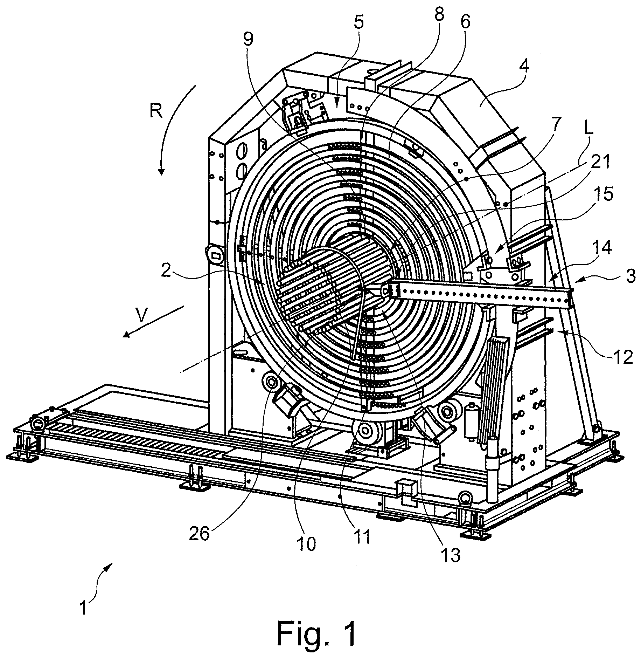

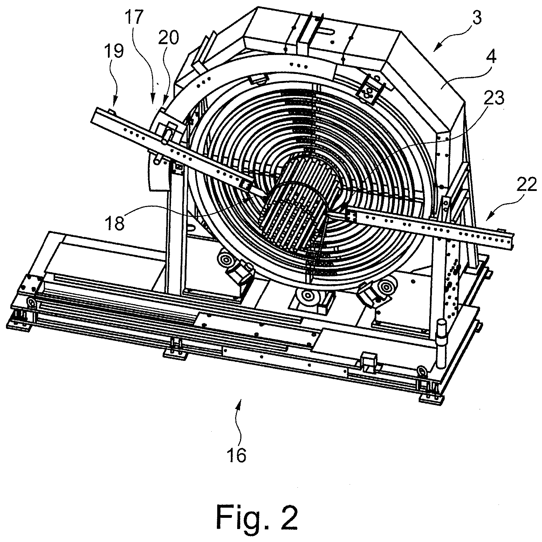

Eine erfindungsgemäße Korbbindemaschine 1 zur Herstellung eines Bewehrungskörpers in Form eines Bewehrungskorbs 2 umfasst ein Gestell 3 (Figuren 1, 2). Das Gestell 3 umfasst einen Rahmen 4 und ein Hauptrad 5. Das Hauptrad 5 ist am Rahmen 4, insbesondere in eine Rotationsrichtung R drehbeweglich vorhanden. Am Hauptrad 5 sind beispielsweise Ringelemente 6 vorhanden. Die Ringelemente 6 sind vorteilhafterweise in einem Durchmesser zueinander verschieden ausgebildet und zentrisch zu einem zentralen Mittelpunkt oder zu einer zentralen Längsachse L des Hauptrads 5, des Rahmens 4 und/oder des Gestells 3 am Hauptrad 5 angeordnet. Entlang der Ringelemente 6 sind Stellelemente 7 in radialer Richtung, senkrecht zu der Längsachse L positionierbar insbesondere verschieblich gelagert. Vorteilhafterweise sind die Stellelemente 7 in einer Bewegungsebene des Hauptrads 5 und/oder parallel zu der Bewegungsebene des Hauptrads 5 verschieblich gelagert. Denkbar ist beispielsweise auch, dass das Hauptrad 5 Speichen 8 aufweist, entlang welcher ein Stellelement 7 in radialer Richtung, senkrecht zur Längsachse L positionierbar, insbesondere verschieblich vorhanden ist (nicht gezeigt). Des Weiteren ist ein Führungselement 9 am Stellelement 7 angeordnet, welches dazu vorgesehen ist, einen Stab, insbesondere einen Längsdraht 10 des Bewehrungskorbs 2, insbesondere parallel zur Längsachse L zu führen. Das Hauptrad 5 dreht sich bei einem Herstellungsvorgang des Bewehrungskorbs 2 vorteilhafterweise, insbesondere in Vorschubrichtung V gesehen im Uhrzeigersinn.

Ein Bewehrungskorb 2 umfasst einen Querdraht, z.B. in Form eines Wickeldrahts 11 und mehrere Längsdrähte 10. Der Wickeldraht 11 ist mittels der Korbbindemaschine 1 vorteilhafterweise spiralförmig um einen äußeren Umfang des Bewehrungskorbs 2 angeordnet. Das Hauptrad 5 ist vorteilhafterweise um die Längsachse L in einer Bewegungsebene drehbar am Rahmen 4 des Gestells 3 der Korbbindemaschine 1 gelagert. Neben dem Gestell 3 umfasst die Korbbindemaschine 1 vorteilhafterweise mindestens ein weiteres Nebengestell (nicht dargestellt), welches beispielsweise dazu vorgesehen ist, die Längsdrähte 10 des Bewehrungskorbs 2 in eine Vorschubrichtung V, welche vorteilhafterweise parallel zur Längsachse L ausgerichtet ist, zu transportieren.

Des Weiteren umfasst die Korbbindemaschine 2 eine Bindeeinheit 12 mit einem Bindekopf 13. Der Bindekopf 13 ist vorteilhafterweise über Positioniermittel in Form einer Linearverstellung 14 in radialer Richtung quer zur zentralen Längsachse L des Hauptrads 5 positionierbar vorhanden. Hierdurch ist der Bindekopf 13 an eine Bindestelle 26 des Bewehrungskorbs 2 hin und wieder zurück bewegbar am Gestell 3 montiert. Die Linearverstellung 14 ist weiterhin beispielsweise mittels einer Schwenkanordnung 15 schwenkbeweglich am Gestell 3 angeordnet. Hierdurch ist die Linearverstellung 14 und damit der Bindekopf 13 vorteilhafterweise zusammen mit dem Hauptrad 5 um die zentrale Längsachse drehbar vorhanden. Dadurch ist der Bindekopf 13 während eines Bindevorgangs relativ zu einer Bindestelle 26 des Bewehrungskorbs 2 positionierbar.

Weiterhin ist es von Vorteil, dass der Bindekopf 13 der Bindeeinheit 12 eine Drehanordnung 21 aufweist, mittels welcher der Bindekopf 13 um eine Drehachse, welche quer, insbesondere senkrecht zur zentralen Längsachse und parallel zu der Bewegungsebene des Hauptrads 5 ausgerichtet ist, drehbar am Rahmen 4, insbesondere an der Linearverstellung 14 gelagert ist.

In Figur 2 ist eine weitere Variante einer Vorrichtung zur Herstellung einer Bewehrung in Form einer weiteren Korbbindemaschine 16 gezeigt. Die Korbbindemaschine 16 in Figur 2 umfasst gegenüber der Korbbindemaschine 1 aus Figur 1 vorteilhafterweise eine zusätzliche Bindeeinheit 17 und/oder eine Schweißeinheit 22, wobei die verbleibenden Komponenten der Korbbindemaschine 16 vorteilhafterweise identisch zur Korbbindemaschine 1 ausgebildet sind.

Im Folgenden werden insbesondere für die beiden Korbbindemaschinen 1 und 16 für gleiche Komponenten gleiche Bezugszeichen verwendet. Beispielsweise wird vorliegend für verschiedene Bindeelemente 25 und/oder Bindestellen 26 teilweise das gleiche Bezugszeichen 25 verwendet. Beispielsweise ist die zusätzliche Bindeeinheit 17 von einer ersten Bindeeinheit unabhängig beweglich am Gestell 3 angeordnet. Bevorzugterweise ist ein Bindekopf 18 der zusätzlichen Bindeeinheit 17 über eine weitere Linearverstellung 19 und eine weitere Schwenkanordnung 20 am Rahmen 4 der Korbbindemaschine 16 gelagert. Hierdurch ist eine Bewehrungsherstellung vergleichsweise verkürzt. Denkbar ist auch, dass insbesondere an der Korbbindemaschine 16 die Bindeeinheit 12 als Schweißeinheit 22 ausgebildet ist.

Die Schweißeinheit 22 weist z.B. einen Schweißkopf 23 auf, sodass ein Längsdraht 10 und der Wickeldraht 11 mittels eines Schweißverfahrens durch die Korbbindemaschine 16 miteinander verbindbar sind.

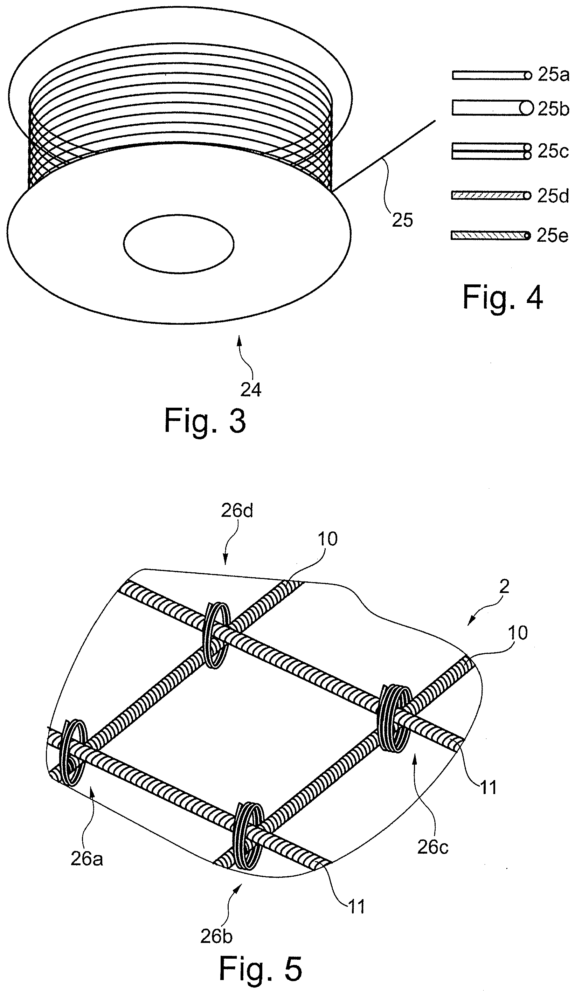

Figur 3 zeigt eine Wickelrolle 24, auf welcher ein Bindeelement 25 in Form eines Endlosdrahts aufgewickelt ist. Bindeelemente 25 können verschiedene Durchmesser aufweisen, mehrlitzig, beschichtet und/oder ummantelt sein, wie es in Figur 4 dargestellt ist. Beispielsweise besitzen verschiedene Bindeelemente 25a, 25d, 25e einen gleichen Durchmesser, sind z.B. aber unterschiedlich beschichtet. Beispielsweise ist das Bindeelement 25a kunststoffbeschichtet, das Bindeelement 25d verzinkt und das Bindeelement 25e unbeschichtet. Denkbar ist auch, dass Bindeelemente 25a, 25b unterschiedliche Durchmesser aufweisen. Außerdem ist es vorstellbar, dass ein Bindeelement 25c mehradrig ausgebildet ist, z.B. zweiadrig.

In Figur 5 ist jeweils ein Bindeelement 25 an einer Bindestelle 26 gezeigt, wobei das Bindeelement 25 an der Bindestelle 26 jeweils einen Quer- und einen Längsdraht 10, 11 umschließt. An der Bindestelle 26a ist das Bindeelement 25 z.B. zweimal um den Quer- und den Längsdraht 10, 11 gewickelt (Zweifachwicklung) vorhanden, an der Bindestelle 26b z.B. dreimal (Dreifachwicklung) und an der Bindestelle 26c z.B. viermal (Vierfachwicklung). An der Bindestelle 26d ist ein weitere Bindeelement 25 in Form eines zweiadrigen Drahts entsprechend dem Bindeelement 25c aus Figur 4 gezeigt, welches den Quer- und den Längsdraht 10, 11 einmal umwickelt (Einfachwicklung).

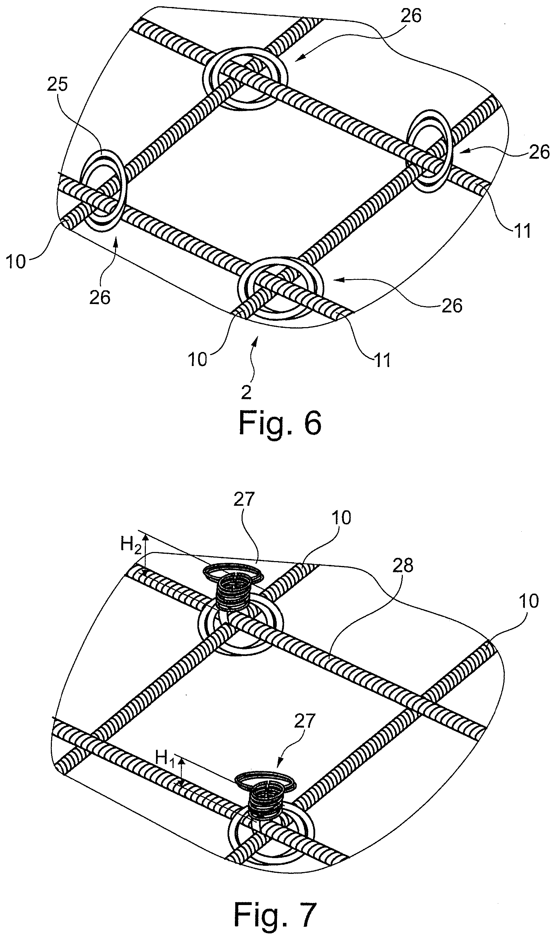

In Figur 6 sind zwei verschiedene Schlingenausrichtungsmöglichkeiten eines Bindeelements 25 an Bindestellen 26 dargestellt. Beispielsweise ist ein Bewehrungskorb 2, welcher an Bindestellen 26 zueinander unterschiedlich ausgerichtet Bindeelemente 25 aufweist, vorteilhafterweise vergleichsweise stabil und/oder transportsicher vorhanden.

In Figur 7 sind an Bindestellen 26 angeordnete Bindeelemente 25 gezeigt, wobei die Bindeelemente 25 sich in Höhen H1 und H2 ihrer Enden 27 unterscheiden. Die Höhen H1 und H2 erstrecken sich hierbei quer, insbesondere senkrecht zu einer Längserstreckung des Längsdrahts 11 von einer Außenseite 28 eines Längsdrahts 11 bis zu einem von der Außenseite 28 des Längsdrahts 11 entferntesten Punkt der Enden 27. Vorteilhafterweise ist die Bindeeinheit 12 der Korbbindemaschine derart ausgebildet, dass Enden 27 eines Bindeelements 25 im angeordneten Zustand an der Bindestelle 26 vergleichsweise kurz vorhanden sind und/oder vergleichsweise wenig von einem Längs- und/oder Querdraht 10, 11 abstehen.

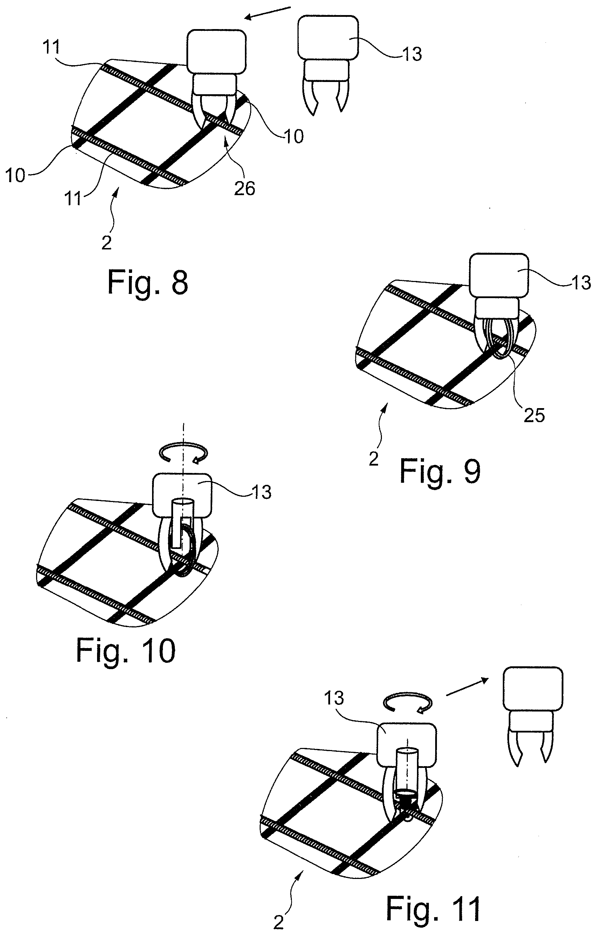

In den Figuren 8 bis 11 ist ein Bindevorgang eines Bindeelements 25 an einer Bindestelle 26 gezeigt. Zunächst positioniert die Korbbindemaschine 1 eine Quer- und einen Längsdraht 10, 11 relativ zueinander, sodass die beiden Drähte 10, 11 sich an der Bindestelle 26 beispielsweise kreuzen und/oder vorteilhafterweise aneinander anliegen. Anschließend bewegt die Korbbindemaschine 1 den Bindekopf 13 an die Bindestelle 26 heran (Figur 8). Ist der Bindekopf 13 an der Bindestelle 26 positioniert beginnt der Bindevorgang. Hierzu wickelt der Bindekopf 13 zunächst das Bindeelement 25 um den Quer- und den Längsdraht 10, 11 (Figur 9). Anschließend verdrillt der Bindekopf 13 Enden des Bindeelements 25 in einer Drehbewegung miteinander, sodass die Wicklungen des Bindeelements 25 um den Quer- und den Längsdraht 10, 11 sich an der Bindestelle 26 zusammenziehen und das Bindeelement 25 eine Bindekraft auf den Quer- und den Längsdraht 10, 11 ausübt, sodass die beiden Drähte 10, 11 durch das Bindeelement 25 aneinander gedrückt und in ihrer relativen Position zueinander festgelegt werden. (Figur 10). Anschließend wird der Bindekopf 13 von der Bindestelle 26 wegbewegt (Figur 11), z.B. zu einer weiteren Bindestelle 26, sodass der Bindevorgang an der weiteren Bindestelle 26 von neuem starten kann.

**Bezugszeichenliste**

| | | | |
|---|---|---|---|
| 1 | Korbbindemaschinen | 20 | Schwenkanordnung |
| 2 | Bewehrungskorb | 21 | Drehanordnung |
| 3 | Gestell | 22 | Schweißeinheit |
| 4 | Rahmen | 23 | Schweißkopf |
| 5 | Hauptrad | 24 | Wickelrolle |
| 6 | Ringelement | 25 | Bindeelement |
| 7 | Stellelement | 25a | Bindeelement |
| 8 | Speiche | 25b | Bindeelement |
| 9 | Führungselement | 25c | Bindeelement |
| 10 | Längsdraht | 25d | Bindeelement |
| 11 | Wickeldraht | 25e | Bindeelement |
| 12 | Bindeeinheit | 26 | Bindestelle |
| 13 | Bindekopf | 26a | Bindestelle |
| 14 | Linearverstellung | 26b | Bindestelle |
| 15 | Schwenkanordnung | 26c | Bindestelle |
| 16 | Korbbindemaschine | 26d | Bindestelle |
| 17 | Bindeeinheit | 27 | Ende |
| 18 | Bindekopf | 28 | Außenseite |
| 19 | Linearverstellung | | |

## Patentansprüche

1. Vorrichtung (1, 16) zur Herstellung einer Bewehrung (2), wobei die Vorrichtung (1, 16) Positioniermittel zur automatisierten Positionierung von Längsstäben (10) und eines Querdrahts (11) der herzustellenden Bewehrung (2) aufweist, sodass die Vorrichtung (1, 16) ausgebildet ist, eine zentrale Längsachse vorzugeben, wobei die Vorrichtung (1, 16) bei der Herstellung der Bewehrung (2) die Längsstäbe (10) entlang der Längsachse in eine Förderrichtung und zeitgleich um die zentrale Längsachse bewegt, wobei die Vorrichtung (1, 16) eine Bindeeinheit (12) aufweist, wobei die Vorrichtung (1, 16) dazu ausgebildet ist, mittels der Bindeeinheit (12) einen Längsstab mit dem positionierten Querdraht (10, 11) durch ein Bindeelement (25) an einer Bindestelle automatisch miteinander zu verbinden, wobei das Bindeelement (25) als ein Biegedraht und/oder eine Biegeschnur ausgebildet ist, wobei die Positioniermittel eine Positioniereinheit (14, 15) aufweisen, um die Bindeeinheit (12) zu positionieren, wobei die Vorrichtung (1, 16) derart ausgebildet ist, dass die Positioniereinheit (14, 15) eine Bewegung der Bindeeinheit (12) derart an die Bewegung eines Längsstabs (10, 11) anpasst, dass die Bindeeinheit (12) relativ zu der Bindestelle während eines Bindevorgangs ortsfest verbleibt.

2. Vorrichtung (1, 16) nach dem vorangegangenen Anspruch 1, **dadurch gekennzeichnet, dass** die Vorrichtung (1, 16) einen Querdraht (11) und einen Längsdraht (10) in einem Winkel zueinander ausrichtet.

3. Vorrichtung (1, 16) nach einem der vorangegangenen Ansprüche, **dadurch gekennzeichnet, dass** die Vorrichtung (1, 16) eine Schweißanlage (22) aufweist, mittels welcher der Längs- und der Querdraht (10, 11) miteinander verbindbar sind.

4. Vorrichtung (1, 16) nach einem der vorangegangenen Ansprüche, **dadurch gekennzeichnet, dass** die Bindeeinheit (12) derart ausgebildet ist, dass ein Quer- und ein Längsdraht (10, 11) an der Bindestelle durch ein Bindeelement (25) umwickelbar ist.

5. Vorrichtung (1, 16) nach einem der vorangegangenen Ansprüche, **dadurch gekennzeichnet, dass** die Bindeeinheit (12) derart ausgebildet ist, dass ein Bindemoment eines Bindeelements (25) an der Bindestelle vorgebbar ist.

6. Vorrichtung (1, 16) nach einem der vorangegangenen Ansprüche, **dadurch gekennzeichnet, dass** die Vorrichtung (16) zwei oder mehr Bindeeinheiten (12, 17) aufweist.

7. Vorrichtung (1, 16) nach dem vorangegangenen Anspruch, **dadurch gekennzeichnet, dass** die zwei oder mehr Bindeeinheiten (12, 17) durch die Positioniermittel (14, 15, 19, 20) unabhängig voneinander positionierbar vorhanden sind.

8. Vorrichtung (1, 16) nach einem der vorangegangenen Ansprüche, **dadurch gekennzeichnet, dass** die Vorrichtung (1, 16) derart ausgebildet ist, dass eine Bindungsrichtung des Bindeelements (25) an der Bindestelle vorgebbar ist.

9. Vorrichtung (1, 16) nach einem der vorangegangenen Ansprüche, **dadurch gekennzeichnet, dass** die Vorrichtung (1, 16), insbesondere die Bindeeinheit (12) derart ausgestaltet ist, dass verschiedene Bindeelemente (25a - 25e) verwendbar sind.

10. Vorrichtung (1, 16) nach einem der vorangegangenen Ansprüche, **dadurch gekennzeichnet, dass** die Vorrichtung (1, 16), insbesondere die Bindeeinheit (12) derart ausgestaltet ist, dass mehrere Bindeelemente (25) verwendbar sind.

11. Vorrichtung (1, 16) nach einem der vorangegangenen Ansprüche, **dadurch gekennzeichnet, dass** die Vorrichtung (1, 16), insbesondere die Bindeeinheit (12) derart ausgestaltet ist, dass verschiedene Längs- und/oder Querdrähte (10, 11) miteinander verbindbar sind.

12. Vorrichtung (1, 16) zur Herstellung einer Bewehrung (2) nach einem der vorangegangenen Ansprüche, **dadurch gekennzeichnet, dass** die Vorrichtung (1, 16) als eine Korbbindemaschine, insbesondere als eine Bewehrungskorbbindemaschine und/oder als eine Mattenkorbbindemaschine ausgebildet ist.

## Claims

1. Device (1, 16) for producing a reinforcement (2), wherein the device (1, 16) has positioning means for the automated positioning of longitudinal bars (10) and of a transverse wire (11) of the reinforcement (2) to be produced, so that the device (1, 16) is designed to predefine a central longitudinal axis, wherein the device (1, 16), when producing the reinforcement (2), moves the longitudinal bars (10) in a conveying direction along the longitudinal axis and simultaneously about the central longitudinal axis, wherein the device (1, 16) has a binding unit (12), wherein the device (1, 16) is designed to automatically connect a longitudinal bar and the positioned transverse wire (10, 11) to one another by way of a binding element (25) at a binding point by means of the binding unit (12), wherein the binding element (25) is formed as a flexible wire and/or a flexible cord, wherein the positioning means have a positioning unit (14, 15) for positioning the binding unit (12), wherein the device (1, 16) is designed in such a manner that the positioning unit (14, 15) adapts a movement of the binding unit (12) to the movement of a longitudinal bar (10, 11) in such a manner that the binding unit (12) remains stationary relative to the binding point during a binding procedure.

2. Device (1, 16) according to the preceding Claim 1, **characterized in that** the device (1, 16) aligns a transverse wire (11) and a longitudinal wire (10) at an angle to one another.

3. Device (1, 16) according to one of the preceding claims, **characterized in that** the device (1, 16) has a welding system (22) by means of which the longitudinal and the transverse wire (10, 11) are connectable to one another.

4. Device (1, 16) according to one of the preceding claims, **characterized in that** the binding unit (12) is designed in such a manner that a transverse and a longitudinal wire (10, 11) are able to be wrapped by a binding element (25) at the binding point.

5. Device (1, 16) according to one of the preceding claims, **characterized in that** the binding unit (12) is designed in such a manner that a binding momentum of a binding element (25) at the binding point is able to be predefined.

6. Device (1, 16) according to one of the preceding claims, **characterized in that** the device (16) has two or more binding units (12, 17).

7. Device (1, 16) according to the preceding claim, **characterized in that** the two or more binding units (12, 17) are present so as to be positionable independently of one another by the positioning means (14, 15, 19, 20).

8. Device (1, 16) according to one of the preceding claims, **characterized in that** the device (1, 16) is designed in such a manner that a binding direction of the binding element (25) at the binding point is able to be predefined.

9. Device (1, 16) according to one of the preceding claims, **characterized in that** the device (1, 16), in particular the binding unit (12), is configured in such a manner that different binding elements (25a-25e) are able to be used.

10. Device (1, 16) according to one of the preceding claims, **characterized in that** the device (1, 16), in particular the binding unit (12), is configured in such a manner that a plurality of binding elements (25) are able to be used.

11. Device (1, 16) according to one of the preceding claims, **characterized in that** the device (1, 16), in particular the binding unit (12), is configured in such a manner that different longitudinal and/or transverse wires (10, 11) are connectable to one another.

12. Device (1, 16) for producing a reinforcement (2) according to one of the preceding claims, **characterized in that** the device (1, 16) is designed as a basket binding machine, in particular as a reinforcement basket binding machine and/or as a mat basket binding machine.

## Revendications

1. Dispositif (1, 16) de fabrication d'une armature (2), le dispositif (1, 16) comportant des moyens de positionnement pour le positionnement automatisé de tiges longitudinales (10) et d'un fil transversal (11) de l'armature (2) à fabriquer, de sorte que le dispositif (1, 16) est configuré pour prédéfinir un axe longitudinal central, le dispositif (1, 16) déplaçant, lors de la fabrication de l'armature (2), les tiges longitudinales (10) le long de l'axe longitudinal dans une direction de transport et simultanément autour de l'axe longitudinal central, le dispositif (1, 16) comportant une unité de liaison (12), le dispositif (1, 16) étant configuré pour relier automatiquement entre eux, au moyen de l'unité de liaison (12), une tige longitudinale au fil transversal (10, 11) positionné, par un élément de liaison (25) sur un emplacement de liaison, l'élément de liaison (25) étant formé comme un fil de pliage et/ou un cordon de pliage, les moyens de positionnement comportant une unité de positionnement (14, 15) pour positionner l'unité de liaison (12), le dispositif (1, 16) étant configuré de telle manière que l'unité de positionnement (14, 15) adapte un déplacement de l'unité de liaison (12) au mouvement d'une tige longitudinale (10, 11) de telle manière que l'unité de liaison (12) reste stationnaire par rapport à l'emplacement de liaison pendant une opération de liaison.

2. Dispositif (1, 16) selon la revendication précédente 1, **caractérisé en ce que** le dispositif (1, 16) aligne un fil transversal (11) et un fil longitudinal (10) l'un par rapport à l'autre selon un angle.

3. Dispositif (1, 16) selon l'une des revendications précédentes, **caractérisé en ce que** le dispositif (1, 16) comporte une unité de soudage (22), au moyen de laquelle le fil longitudinal et le fil transversal (10, 11) peuvent être reliés l'un à l'autre.

4. Dispositif (1, 16) selon l'une des revendications précédentes, **caractérisé en ce que** l'unité de liaison (12) est configurée de telle manière qu'un fil transversal et un fil longitudinal (10, 11) peuvent être enroulés sur l'emplacement de liaison par un élément de liaison (25).

5. Dispositif (1, 16) selon l'une des revendications précédentes, **caractérisé en ce que** l'unité de liaison (12) est configurée de telle manière qu'un couple de liaison d'un élément de liaison (25) peut être prédéfini sur l'emplacement de liaison.

6. Dispositif (1, 16) selon l'une des revendications précédentes, **caractérisé en ce que** le dispositif (16) comporte deux ou plus de deux unités de liaison (12, 17).

7. Dispositif (1, 16) selon la revendication précédente, **caractérisé en ce que** les deux ou plus de deux unités de liaison (12, 17) sont présentes de manière à pouvoir être positionnées indépendamment l'une de l'autre par les moyens de positionnement (14, 15, 19, 20).

8. Dispositif (1, 16) selon l'une des revendications précédentes, **caractérisé en ce que** le dispositif (1, 16) est configuré de telle manière qu'une direction de liaison de l'élément de liaison (25) peut être prédéfinie sur l'emplacement de liaison.

9. Dispositif (1, 16) selon l'une des revendications précédentes, **caractérisé en ce que** le dispositif (1, 16), en particulier l'unité de liaison (12), est configuré de telle manière que différents éléments de liaison (25a-25e) peuvent être utilisés.

10. Dispositif (1, 16) selon l'une des revendications précédentes, **caractérisé en ce que** le dispositif (1, 16), en particulier l'unité de liaison (12), est configuré de telle manière que plusieurs éléments de liaison (25) peuvent être utilisés.

11. Dispositif (1, 16) selon l'une des revendications précédentes, **caractérisé en ce que** le dispositif (1, 16), en particulier l'unité de liaison (12), est configuré de telle manière que différents fils longitudinaux et/ou fils transversaux (10, 11) peuvent être reliés les uns aux autres.

12. Dispositif (1, 16) de fabrication d'une armature (2) selon l'une des revendications précédentes, **caractérisé en ce que** le dispositif (1, 16) est configuré comme une machine à relier des cages, en particulier comme une machine à relier des cages d'armature et/ou comme une machine à relier des cages en treillis.
